# EUROPEAN PATENT SPECIFICATION

(11) **EP 1 475 611 B1**
(45) Date of publication and mention of the grant of the patent: **11.07.2007**
(21) Application number: 03010306.3
(22) Date of filing: 07.05.2003
(51) Int. Cl.: G01C 21/36, G10L 13/04, G10L 13/06, H04M 3/493

(54) **Method and application apparatus for outputting speech, data carrier comprising speech data**
Verfahren und Vorrichtung zur Sprachausgabe, Datenträger mit Sprachdaten
Procédé et appareil d'application de sortie vocale, support de donées comprenant des donées de parole

(43) Date of publication of application: 10.11.2004
(73) Proprietor: Harman/Becker Automotive Systems GmbH, 76307 Karlsbad (DE)
(72) Inventor: Russlies, Lars, 22145 Hamburg (DE); Wietzke, Joachim, 76228 Karlsruhe (DE); Lehmann, Andreas, 22495 Hamburg (DE)
(74) Representative: Bertsch, Florian Oliver

(56) References cited:
- EP-A- 0 901 000
- WO-A-02/23331
- WO-A-02/097610
- US-A- 5 406 492
- US-A- 5 799 264
- US-A1- 2002 184 002
- US-A1- 2003 028 380
- US-B1- 6 345 250
- US-B1- 6 487 713

## Description

This invention relates to a method of outputting speech, to a data carrier comprising speech data and to an application apparatus according to the preamble of the independent claims.

In interfacing to a user, various applications increasingly use speech output. Speech output is particularly used, when the attention of a user, particularly the visual attention, should not be destructed by an optical interface. A typical example for this is a car navigation system which directs the driver to a predetermined target. In driving, the driver should carefully watch the traffic situation around him, and thus a visual interface from a car navigation system to the user of said system, who at the same time is the driver of the car, is disadvantageous. Thus, speech output as an acoustical interface is desired.

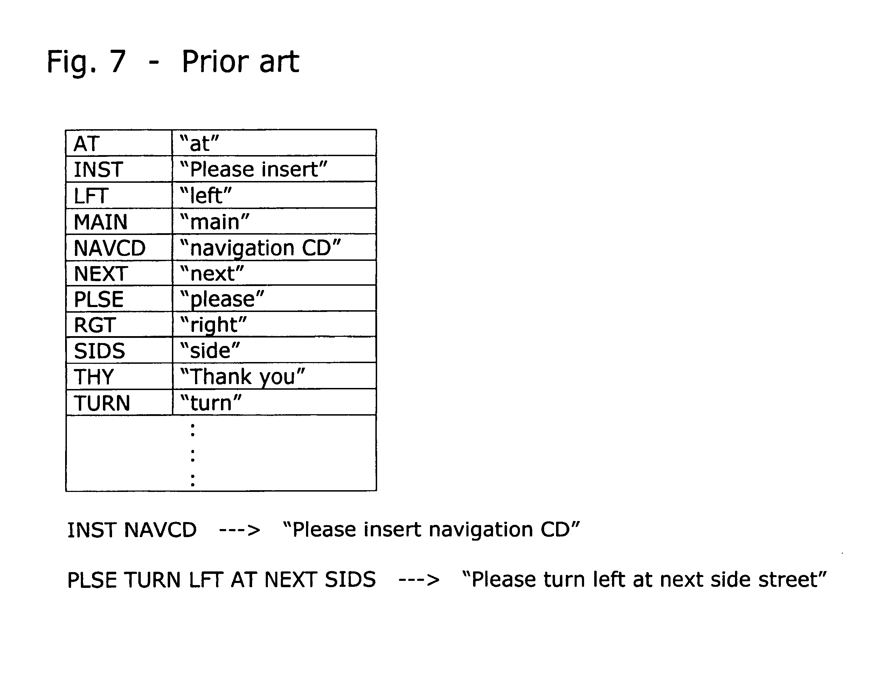

A conventional method of providing speech output as an interface between an application and a user may be explained with reference to Fig. 7. An application performs its main task and comes to a point where a certain output to a user is desired. For example, a car navigation system may, during startup, come to the result that the required data CD is missing, and, thus, wants to output a message that the data CD comprising the navigation data should be inserted. In modern systems for speech output, there is provided a list of speech segments (which may be thought of as sound files) which can be flexibly composed for forming various messages. These speech segments may be larger or smaller depending on the needs determined by criteria such as data quantity, software complexity, speech driver complexity and the like. Fig. 7 shows a table with some speech segments in the right hand column. The navigation system would output a sequence of segment designators according to a predetermined knowledge, and from the table in Fig. 7, the respective speech segments would be taken and composed to the desired speech output. In the above described example, the navigation system or the speech driver thereof might compose the designator sequence INST NAVCD, this leading to the two speech segments "Please insert" and "navigation CD" and thus put together giving the sentence "Please insert navigation CD". In another situation, the navigation system might come to the conclusion that the driver must turn left at the next side street in order to reach his target. The system or the speech driver thereof could, for example, output the sequence of designators "PLSE TURN LFT AT NEXT SIDS", and this together with the speech segments behind the respective segment designators leading to the sentence "Please turn left at the next side street". The data as symbolized by the table in Fig. 7 are usually provided together with the application program and/or together with the navigation data.

Document US 5,799,264 shows a method of outputting speech to a user of a car navigation system. To this end, the navigation apparatus comprises a detachable voice information memorizing means for storing a plurality of voice message pattern codes, respectively corresponding to a plurality of voice message concepts to be informed to a user of an application, and for storing voice waveform data, respectively corresponding to the plurality of voice message pattern codes.

There is an increasing need of providing speech data as symbolized with the table in Fig. 7 separately from the main application, particularly from the executable software or other (potentially expensive) data. The need for this separate provision may either be of technical nature (for example, improvement in the sound quality), or there may be a non-technical rationale behind this need. For example, a user might wish to obtain his speech output with the voice of a particular famous actor, and he would pay some money for receiving the speech data generated by said voice, but he would not like to buy the entire application again. Thus, speech data may be distributed separately. However, if speech data are provided separately from main application data, particularly separately from the main application executable, there may arise problems as regards compatibility in a situation when the main application software changes such that it needs more or different speech data.

It is the object of the invention to provide a method of outputting speech, a data carrier with speech data and an application apparatus capable of reliably controlling the use of appropriate speech data for an application.

This object is accomplished in accordance with the features of the independent claims. Dependent claims are directed on preferred embodiments of the invention.

In a method of outputting speech to a user of an application, the application generates, with reference to speech data, data relating to speech output in accordance with requirements of said application. Particularly, it generates a set of one or more segment designators, said segment designators designating speech segments, and it associates with said set a required-speech-data-identifier (RSDI). Speech data are provided which include speech segments respectively associated with segment designators, and an actual-speech-data-identifier (ASDI). The two identifiers (RSDI and ASDI) are compared with each other, and in accordance with the comparison result, speech is composed.

The term "speech data" in the sense of this specification means a plurality of speech segments respectively associated to segment designators, and this assembly of associated speech segment coming together with an actual-speech-data-identifier (ASDI) which - roughly spoken - identifies the version of said speech data. The number of speech segments in said speech data are sufficient to cover all the language output needs of the application generating the speech output. Thus, speech data in the sense of this application may be thought of as a kit of speech segments, said kit being full enough to be able to produce all required speech outputs therefrom by appropriately composing its individual segments.

A speech segment in the sense of this application may be a piece of speech which is handled as a non-dividable unit when composing speech.

Particularly, different speech data may be provided, namely default speech data (for example, a male voice, a female voice), and optional speech data (for example, the speech provided by the voice of a famous actor). If the comparison of said identifiers renders a predetermined result, the optional speech data are used and otherwise the default speech data are used.

Preferably, the default speech data come together with the application software and application data, and thus they should be to 100 percent fitting to the needs of said application. In contrast thereto, the optional speech data may come separate from the main application executable, and thus it may be that there are version discrepancies. By referring to the actual-speech-data-identifier, it is possible to determine whether the optional speech data fit to the needs of the application. If yes, the optional speech data may be used, and if no, the default data will be used.

Thus, the optional speech data comprise the actual-speech-data-identifier ASDI, whereas the default speech data do not necessarily need such an identifier as long as it is ensured that they fit to the needs of the application anyway.

The above mentioned association of the required-speech-data-identifier with a sequence of one or more segment designators may generally be such that by some kind of provision it is ensured that information about the required speech data is provided for a sequence of segment designators. This may be accomplished by firmly adding specific numbers or characters or data to said sequence of segment designators, but it also may be much more loose, e.g. by the à priori knowledge of the software or the speech driver about the software version from which the sequence of segment designators was generated. In this case, it is not necessary to "physically attach" said identifier to the sequence of segment designators.

Since software development may lead to repeated new versions of software, there is a desire for compatibility amongst versions. This means, that at least for a certain while speech data are developed such that further developed speech data are different from earlier speech data in that the later speech data have speech segments added, but no deletions taking place. This leads to a downward compatibility of speech data in a sense that later assembled speech data are compatible with earlier distributed speech data (and the software fitting thereto). However, as software development proceeds there may come the need to completely restructure speech output. For example, this may be the case when the amount of data for an increasing number of large speech segments gets bigger and bigger. A remedy for this may be to use a higher number of smaller speech segments, this having the overall consequence that a lower amount of data is required, but also the consequence, that in such a change the thus assembled speech data are no longer compatible to earlier speech data. Thus, the ASDI and the structure around it may be such that it gives both information about compatibility and non-compatibility of the speech data to different lines of development of speech data and software.

A data carrier comprising speech data includes a first storage region having stored thereon a plurality of speech segments respectively associated to segment designators, and a second storage region having stored thereon an actual speech data identifier for giving information about the relationship of the speech data to earlier and/or later and/or possible other speech data and software using said speech data.

An application apparatus which requires speech output to a user (particularly as an interface to said user) comprises an application which generates data relating to speech output with reference to speech data in accordance with requirements of said application. It generates a sequence of one or more speech segment designators, said sequence being associated to a required-speech-data-identifier. Further, the apparatus has means for comparing the required-speech-data-identifier with an actual-speech-data-identifier obtained from speech data. And means are provided for composing speech with reference to said sequence of segment designators and said speech data in accordance with the result of said comparison.

Particularly, if the comparing means render a predetermined result, then optional speech data having the actual-speech-data-identifier are used for composing speech, and otherwise default speech data are used.

The application running on said application apparatus may preferably be a car navigation software in which messages from the system to a user, particularly the driver of a car, are output acoustically by synthesized speech in accordance with requirements and results of said car navigation application system. The synthesized messages may be input prompts, or informational outputs. In parallel to speech output, a visual output may be provided, e.g. by readable text messages, map display or the like.

In the following, preferred embodiments of the invention are described with reference to the figures in which
- Fig. 1: shows the configuration in which the invention is applicable,
- Fig. 2: shows a preferable structure of speech data according to the invention,
- Fig. 3: shows an output format of an application as considered according to the invention,
- Fig. 4: shows the development over time of speech data,
- Fig. 5: shows the structure of an application apparatus,
- Fig. 6: shows a flowchart of a method according to the invention, and
- Fig. 7: shows prior art speech data.

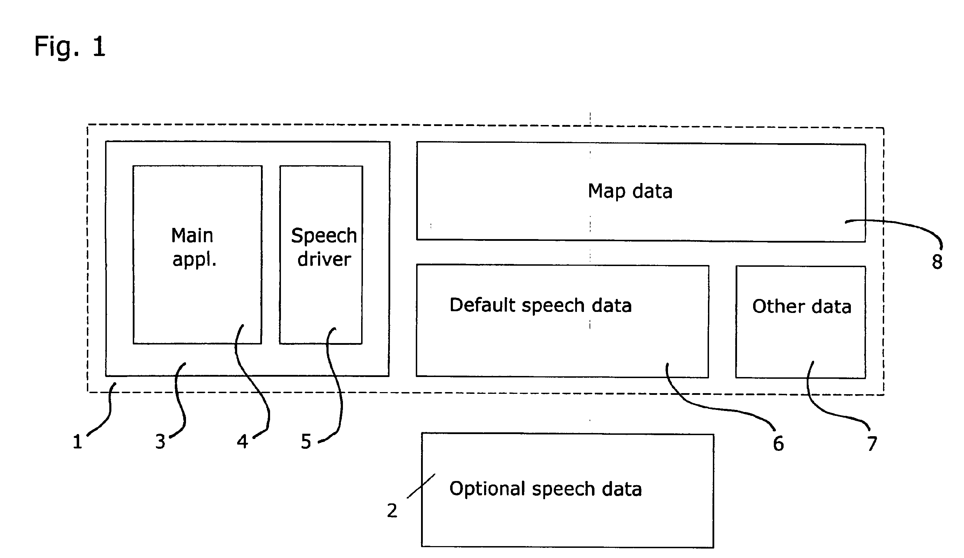

Fig. 1 shows the structure in which the present invention may be used. Reference numeral 1 indicates a package which may come as a unit, e.g. a collection of files on a data carrier. It may comprise a software part 3 (executables), which in turn may comprise a main application 4 for performing the primary tasks of the application (e.g. position finding, root finding and the like), and a speech driver 5 for generating speech output. Besides the software (executable), data 6-8 may be provided, in a car application system, e.g. map data 8 and other data 7. Further, default speech data 6 may be provided. These default speech data are fully adapted to the needs of the main application, and thus the package 1 in itself is ready for being used. Without further measures, the speech driver 5 would use the default speech data 6 for generating speech output.

In nowadays car navigation applications speech data have a comparatively little data volume (usually lower than 1 MB), which is far less than the volume of map data 8. In view of the data quantity of speech data 6, there may also be more than one set of default speech data. Thus, "parallel" sets of default speech data may be provided, these being selectable by the user. For example, speech data having speech segments from a female voice may be provided in parallel to speech data having speech segments from a male voice. The driver may select one of said speech data. Note in this context, that the speech content in both speech data is the same. However, the voice may be different or ambient sounds may be provided or suppressed or the like.

Optional speech data 2 may be provided separately from default speech data 6. For example, they may be a data file downloaded through the internet and/or wireless or bought on a separate disk or CD. This has the consequence that their structure and content may not necessarily fully match to the needs of the main application, keeping in mind that the main application is under development, new releases with new software options and accordingly new speech output requirements coming on a regular basis.

In order to allow a check as to whether the optional speech data 2 fit to the needs of the main application 4, the optional speech data 2 are provided with an actual-speech-data-identifier. Referring to this identifier it will become possible to check whether quantity and/or quality of the optional speech data 2 fit to the needs of main application 4. If they fit, they will be used, and if they do not fit, the default speech data 6 will be used.

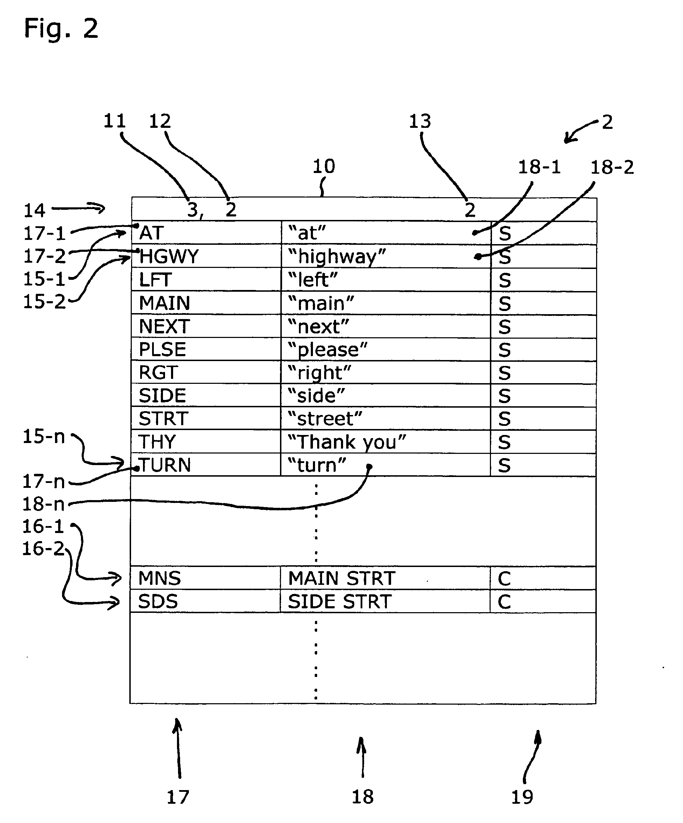

Fig. 2 shows a possible structure of speech data according to the invention. Shown is a kind of table 10, which symbolizes the data structure of the optional speech data 2. The table has an identifier section 14 and speech entries 15. In a preferred embodiment, they may also comprise composition list entries 16 (to be explained later). Each speech entry 15 comprises at least a specific speech segment 18-1, 18-2, ..., 18-n, see column 18. In Fig. 2 these segments are symbolized by written words. In reality, these entries may be sound files or pointers (address pointers) to related sound files which may be utilized for composing speech. For example, in a table structured according to Fig. 2, instead of the entry "highway", a pointer to a sound file may be found, the sound file reproducing the outspoken word "highway" when played by an appropriate program.

The speech segments 18-1, 18-2, ..., 18-n are respectively associated to segment designators 17-n. These are shown in column 17. The segment identifiers are those known to the main application or its speech driver and are used there for composing speech. They are then used to access the related speech segments and thus to finally find the related sound files to compose speech ready for output. The segment designators 17-1, 17-2, ..., 17-n may resemble a kind of "mnemonic" code and they may be found explicitly in every speech entry 15. Instead, however, also numbers may be used or the association may be such that the respective segment designator is simply an address or an address offset from a basic address so that the storage location of the respective speech segment 18-n (pointer to a sound file, sound file itself) can be found.

The standard approach for synthesizing speech is thus to output a sequence of segment designators by the main application 4 or its speech driver 5, to access the speech data 6, 2 as schematically shown in Fig. 2 with said segment designators, to retrieve finally the respective sound files and to deliver them in an appropriate sequence and timing to an appropriate player. Thus, speech is finally output.

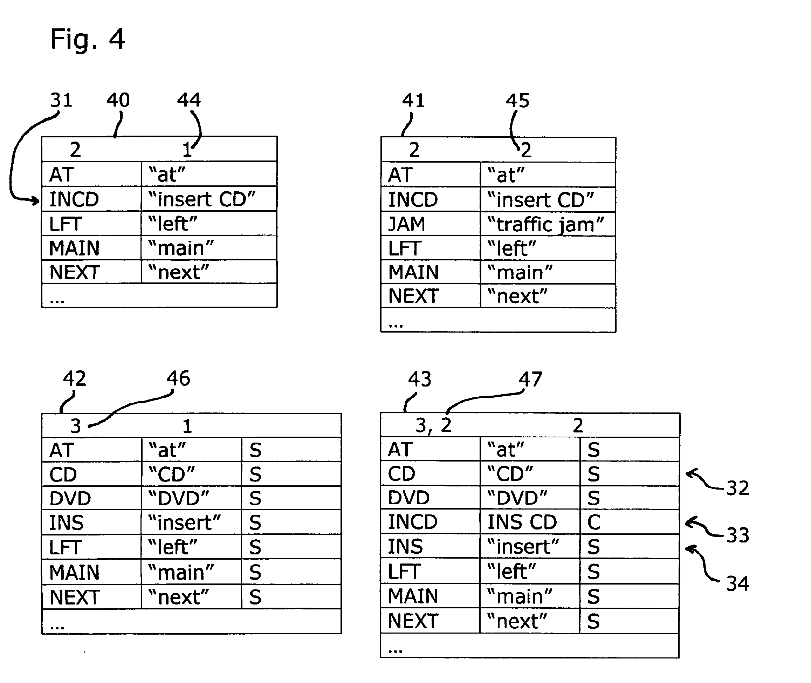

The function and structure of the identifier section 14 in Fig. 2 is now explained with reference to a possible evolution of speech data, as it is shown by way of example in Fig. 4. Fig. 4 shows four similar sound data, namely 40-43. It is assumed that they were composed in the order of their numbering with say respectively half a year in between. In this context, it should be noted that usually new speech data can fully be used only by a new application software. For using speech data to its full extent, it is necessary that the application software has *a priori* knowledge about the speech data, particularly the available elements known to the application by their segment designators. Only if this knowledge is present, sound data can be used to their full extent.

Sound data 40 show by way of example some entries of the speech data, the respective speech segments being needed for composing messages. Note, that only some few entries are shown. In reality, many more entries will be found. After sound data 40, sound data 41 were released. It is assumed that a new functionality was added to the main application software, namely detecting a traffic jam recalculating the traveling root and giving a respective message to the driver (e.g. "Because of traffic jam your traveling root was recalculated and changed"). In order to output this message, the word "traffic jam" is needed and accordingly it constitutes a new entry in the speech data. Note, however, that in the transition from sound data 40 to sound data 41 only entries were added. Existing entries remained unchanged. This has the consequence that older software (for example, software using speech data 40) will also be able to use speech data 41. Namely, all entries required by the application software behind speech data 40 can also be found in speech data 41. This means that in the shown example, the speech data are downward compatible.

Again, new speech data 41 would be released only when new software is available. New speech data 41 may, however, be optional speech data in a sense that they are not shipped together with the matching software. Thus, from a user's point of view, optional speech data 41 would be presented to a navigation system, e.g. the one with an older application software (for which speech data 40 were Grafted).

Nevertheless, this older software will be able to fully use speech data 41, because all entries in speech data 40 can also be found in speech data 41. However, the situation may also be vice versa: A new software (that behind speech data 41) was released and the user tries to offer older optional speech data 40 to said application software. Here, problems may exist because the newer software may wish to output the word "traffic jam" which is not known in the older optional speech data 40. Then, the optional speech data 40 cannot be used and instead the default speech data released with the newer software must be used.

This is the point where the identifier section becomes important. In a specific embodiment, the identifier section 14 can contain a version identifier 44, 45. As can be seen in Fig. 4, the version identifier increased from speech data 40 to speech data 41 from 1 to 2. A software application would then check the version identifier 44, 45 in the identifier section 14 of speech data 40, 41, and if the version identifier of the speech data identifies a version younger than that required by the related software, the optional speech data may be used. Otherwise, the default speech data would be used. E.g., the software released together with speech data 40 would check for a version identifier number of one or higher and take the optional speech data having such a version identifier. Likewise, the software released together with speech data 41 would check for version identifier numbers of two or higher and would take the fitting optional speech data 2, and would otherwise take the default speech data 6. Utilizing the version identifier as described above implies the prerequisite that the accessed speech data may be compatible.

Another change mechanism in the speech data is shown in the transmission from speech data 40 (or 41) to speech data 42. Here, complete structural rechanges were performed with particularly having the consequence that not all entries of the older speech data can be found in the new speech data. Assume, for example, that in the transmission from the former software to the newer software, the option of receiving the map data from a DVD instead of from a CD was added. Speech output may then be refined that the former prompting message "insert CD" in speech data 40 is broken up into the word "insert" and the two acronyms "CD" and "DVD", each of them being separately addressable by individual segment designators. The system would then compose the appropriate message depending on whether the system is equipped with a CD drive or a DVD drive. The transition from speech data 40 to 42 has the advantage that overall data quantity is reduced. However, it has the disadvantage that the new speech data 42 are no longer compatible to the former speech data 40 or 41. In order to detect this, a root identifier 46 may be provided in the identifier section of the speech data. In the transition from speech data 40 or 41 to 42 this root identifier changed from 2 to 3 (assuming that an earlier, not shown root exists). When an application software accesses speech data, it may check the root identifier for identity. Only those speech data from an identical root can be used. Other optional speech data cannot be used. The software fitting to speech data 40 would not find the entry "INCD" in speech data 42, and the software fitting to speech data 42 would not find the entry to "DVD" in speech data 40. Thus, the speech data are mutually not fitting, and a respective check of the root identifier has to be on identity. The software fitting to speech data 42 checks the root identifier for identity to number 2, and takes a corresponding optional speech data if it has such a root identifier. Otherwise, the default speech data are used.

It is possible to use root identifier 11, 12, 46, 47 and version identifier 13, 44, 45 in combination. Thus, the identifier section may have two entries, namely a root identifier and a version identifier. The version identifier of optional speech data is checked to be identical to or larger than the required version, and the root identifier is checked to be the same as that required. If both conditions are met, the optional speech data are used. Otherwise, the default speech data are used. In a more general sense, the actual-speech-data-identifier 14 may comprise a component for allowing to detect the compatibility of speech data in a downward compatible line of speech data, and a component for detecting non-compatible lines of speech data.

Speech data 43 in Fig. 4 show an option also shown in the lower portion of Fig. 2, namely the use of composition lists. It may be desirable to craft newer speech data such that they also may be used with software from older roots. For example, it may be desirable to maintain in speech data 43 the capability of saying the message behind the segment designator INCD in speech data 40 (cf. 31). Speech data 43 show how this could be accomplished. Said speech data also have a segment designator INCD, cf. reference numeral 33. However, it does not have a speech segment (a possibly voluminous sound file) behind it. Rather, it has a composition list consisting of other segment designators of the speech data. It, for example, has the segment designators INS and CD, and these segment designators have all entries 32 and 34 in the speech data 43. These composition lists require only little data volume, and thus the objective of keeping data amount low is met. The segment designators of composition lists may be alphabetically sorted into the speech data, as shown in Fig. 4, or they may be provided separately, as shown as entries 16 in Fig. 2. Column 19 in Fig. 2 and the right hand columns in speech data 42 and 43 of Fig. 4 show a discriminator between speech segment entries ("S") and composition list entries ("C"). This may be provided if it is not otherwise possible to distinguish composition lists 16 and speech entries 15 properly.

The speech driver 5 of the application software 3 has to be able to handle composition lists. For speech segment entries, the speech driver would, for example, obtain the address of a specific sound file, whereas from a composition list, it would obtain two or more other segment designators, which again had to be used to access speech data in order to retrieve the respective speech segments therefrom. By means of using composition lists, compatibility amongst speech data of different roots is again established and accordingly, the root entry in the identifier section 14 may have the entries of all those roots to which compatibility is given. Compatibility is given if all entries in the former speech data 40 are found in the newer speech data of another root, either by identity of entries, or by "mapping" them with composition lists.

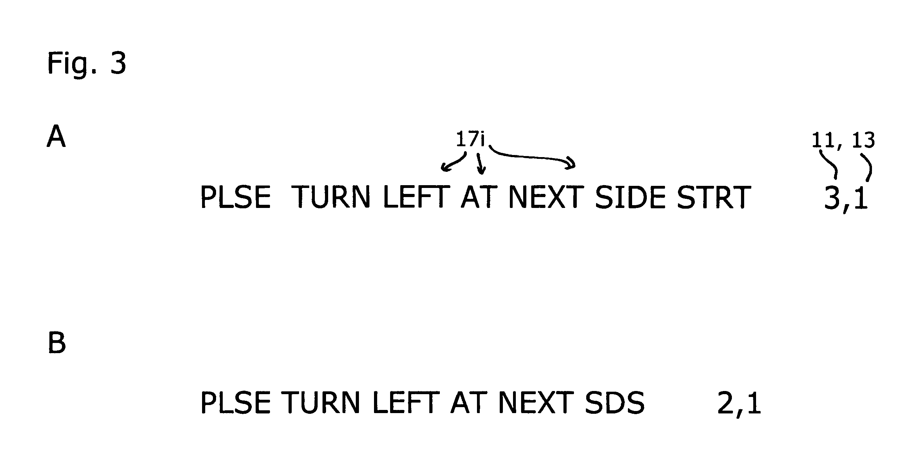

Fig. 3 shows the possible output format of a speech driver when a sequence of segment designators was generated. The example of Fig. 3 refers to the table in Fig. 2. The sequence shown in Fig. 3A has a sequence of segment designators leading to the output "Please turn left at next side street". It is further assumed that this sequence was generated by a speech driver requiring speech data of root 3, and there at least version 1. Thus, associated with that sequence of segment designators is a required-speech-data-identifier "3,1" which says that speech data of root 3 and at least version 1 are required. With this required-speech-data-identifier, the table in Fig. 2 would be accessed, and it would show that the root identifier in the actual-speech-data-identifier is identical and the version identifier is higher, so that overall the table of Fig. 2 may be used.

Fig. 3B shows the output sequence of an assumed earlier version. It is mostly identical to the former version. However, it is assumed that in former speech data of root 2 an immediate speech entry for "SDS (namely "side street") existed, which does no longer exist in the version of Fig. 2 (root 3). However, the table of Fig. 2 has a composition list for the former immediate speech entry SDS, and accordingly, the table of Fig. 2 is also compatible to root 2 outputs. Accordingly, it has two entries "3,2" in the root identifier of the actual-speech-data-identifier. If then a sequence as shown in Fig. 3B is to be processed, the root number 2 of the required-speech-data-identifier (coming from an older software) is compared with all entries in the identifier section 14, and since the root identifier there mentions also root 2, said table can be used. The designator SDS would be composed by utilizing the composition list of the elements SIDE and STRT, said two designators existing as segment designators in the table.

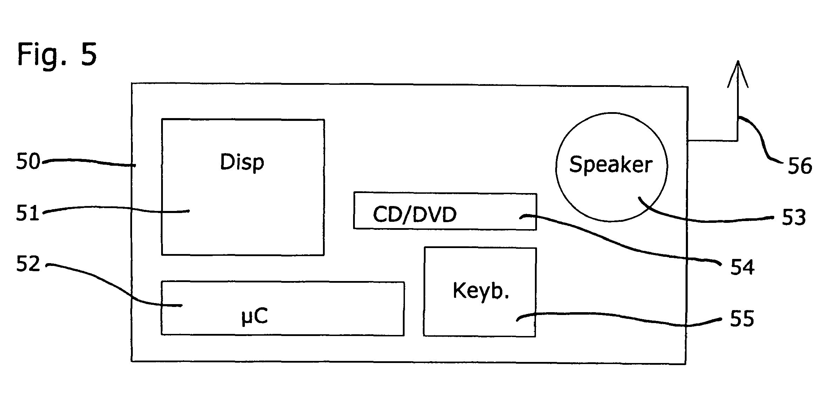

Fig. 5 shows an application apparatus in which the invention can be implemented. The overall apparatus 50 comprises as an option a display 51, e.g. an LCD screen or a CRT. It further comprises a microcomputer 52 of more or less sophisticated built. Keys and other input elements 55 may be provided as well as an output speaker 53. Further, a radio input (analog and possibly also for digital data) 56 may be provided. 54 symbolizes a slot for a data carrier such as a CD or a DVD. Thus, Fig. 5 may symbolize a car navigation device for a vehicle. The optical output 51 may to some extent operate in parallel to a speaker 53.

Microcomputer 52 comprises a memory, amongst them possible also a non-volatile memory such as a hard drive onto which external data may be copied, e.g. optional speech data 2. The elements shown in Fig. 1 may be input through a slot 54 or (for lower data quantities) through antenna 56 and may be stored on a non-volatile memory. The microcomputer may load the required software either from the CD/DVD or from the hard drive and execute operations in accordance with the main application, and for speech output as described in this application.

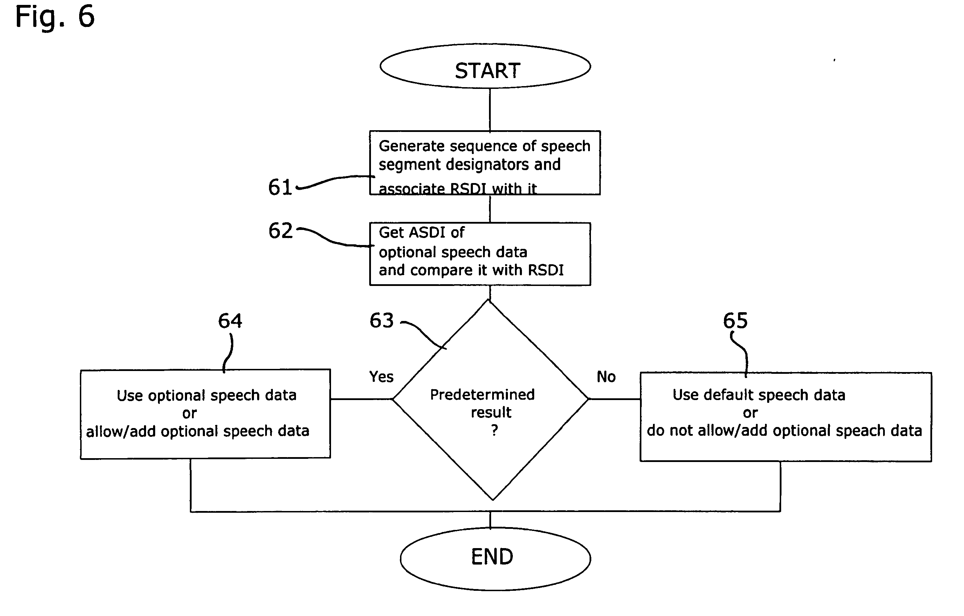

Fig. 6 shows a flow diagram of a method of outputting speech to a user of an application. First, the application generates a sequence of speech segment designators for defining the desired speech output, e.g., as shown in Fig. 3. This sequence is associated to a required-speech-data-identifier (RSDI). This association may be more or less explicitly by attaching respective numbers or characters to the string of designators. The association may, however, also be comparatively loose in that somewhere in the system information about the required speech data is stored, and it is known where this information can be found (step 61).

In step 62, available optional speech data are accessed, and their actual-speech-data-identifier (ASDI) is retrieved and compared with the RSDI. If the comparison in step 63 renders a predetermined result, the optional speech data may be used (step 64), and otherwise, the default speech data may be used (step 65). The predetermined result for using the optional speech data 2 may be that
- the root identifier in the RSDI is the same as one of the root identifiers in the ASDI, and/or
- the version identifier in the ASDI is equal to or higher than the version identifier in the RSDI.

At least the use of the optional speech data 2 (step 64) may involve the use of composition lists as mentioned above. This may also apply to step 65. Default speech data may have, but need not to have, an ASDI.

The above-mentioned reference to a comparison of ASDI with RSDI may be made every time speech is to be synthesized. However, it may also be made once and forever during some kind of installation process of optional speech data 2. Then, the check of ASDI and RSDI would, e.g., be made when adopting certain optional speech data 2 to a list of available speech data. When the comparison of ASDI and RSDI renders a predetermined result, offered speech data are allowed for a list of available speech data 6 (male (default), female (default), John Wayne (optional), Rudolf Scharping (optional)), and otherwise it is rejected. Thus, after the check and a possible positive result (saying that the offered optional speech data may be used together with the available software) there needs not necessarily be an immediate step of synthesizing speech. Rather, said optional speech data may be adopted into a list of available speech data and they may perhaps be copied to an appropriate storage location. Vice versa, the RSDI needs not be delivered in association with a sequence of segment designators, but may be given independently therefrom.

The speech data themselves and a data carrier bearing said speech data is also considered to be a part of the invention. The speech data consist of speech segments respectively associated with segment designators. The segment designators may be explicitly provided by strings of characters, or they may implicitly provided in form of storage locations which are known to the software accessing said speech data. The elements shown as speech segments may be immediate sound files at the respective storage locations, or they may be pointers to specific sound files, said sound files being stored elsewhere. Thus, sound data as described in this invention may be a data structure consisting of a plurality of files. They may even comprise little executables for proper installing and storing the required components. In addition, the speech data comprise an actual-speech-data-identifier structured as described above. The data carrier has a storage location storing said identifier.

## Claims

1. Method of outputting speech to a user of an application (4) in which the application generates, with reference to speech data (2,6), data relating to speech output in accordance with requirements of said application (4), **characterized by** the following steps of
generating, by said application, a sequence of one or more segment designators (17), said segment designators designating speech segments (18), and associating, by said application, a required-speech-data-identifier providing information about the required version of speech data with said sequence,
providing speech data, said speech data including
- a plurality of speech segments (18) respectively associated to segment designators (17), and
- an actual-speech-data-identifier (14) identifying the version of the speech data (2),
comparing the required-speech-data-identifier with the actual-speech-data-identifier, and
composing speech with reference to said sequence of segment designators (17) and said speech data in accordance with the result of said comparison,
wherein the required-speech-data-identifier and the actual-speech-data-identifier both include a root identifier (11,12) for detecting non-compatible lines of speech data and a version identifier (13) allowing to detect the compatibility of speech data in a downward compatible line,
wherein the speech data (2) includes one or more composition lists (16), said composition list (16) showing how segments of earlier distributed speech data with a different root identifier (11,12) can be composed from segments in the speech data to which the composition list (16) is attached,
- the root identifier (11, 12) of the speech data comprises also the identifier of the earlier distributed speech data,
- in the comparing step it is checked whether the root identifier (11, 12) in the required-speech-data-identifier is the same as one of the root identifiers (11,12) in the actual-speech-data-identifier, and
- the application supports the use of composition lists (16).

2. Method according to claim 1, wherein default speech data (6) are provided preferably together with the application (1) and optional speech data (2) having the actual-speech-data-identifier (14) are also provided, the optional speech data (2) being used for composing speech if the comparing step renders a predetermined result, and otherwise the default speech data (6) being used.

3. Method according to claim 1 or 2, wherein the optional speech data (2) are used when the comparison shows that
- the root identifier (11, 12) in the required-speech-data-identifier is the same as that in the actual-speech-data-identifier, and
- the version identifier (13) in the required-speech-data-identifier is not larger than that in the actual-speech-data-identifier.

4. Method according to claim 1 or 2, wherein the optional speech data (2) are provided on a data carrier or through the internet or through wireless data transmission.

5. Method according to one of the preceding claims and claim 2,
wherein the optional speech data (2) render the same speech content as the default speech data (6), but differ in acoustical characteristics.

6. Method according to one of the preceding claims, wherein the application is a car navigator.

7. A data carrier comprising speech data used for outputting speech to a user of an application, said data carrier including
- a first storage region (15, 16) having stored thereon a plurality of speech segments (18-n) respectively associated with segment designators (17-n), and
- a second storage region (14) having stored thereon an actual-speech-data-identifier (11-13) identifying the version of the speech data, said identifier giving information about the relationship of the speech data to earlier or possible other versions of said speech data.
**characterized in that** the actual-speech-data-identifier comprises
- a root identifier (11, 12) for distinguishing differing series of speech data and for detecting non-compatible lines of speech data, and
- a version identifier (13) for identifying the position of the speech data within the series of speech data to which it belongs allowing to detect the compatibility of speech data in a downward compatible line,
wherein in said first storage region one or more composition lists (16) are stored, said composition list showing how segments of earlier distributed speech data with a different root identifier can be composed from segments in the speech data to which the composition list belongs.

8. A data carrier according to claim 7, wherein the root identifier comprises entries for those roots to which the speech data are compatible.

9. A data carrier according to one claim 7 or 8, wherein the speech segments comprise sound files or data strings useable by a digital player, or pointers to such files or data strings.

## Patentansprüche

1. Verfahren zum Ausgeben von Sprache an einen Benutzer einer Anwendung (4), in welchem die Anwendung, unter Bezugnahme auf Sprachdaten (2, 6), Sprachausgabe betreffende Daten gemäß den Anforderungen der Anwendung (4) erzeugt, **gekennzeichnet durch** die folgenden Schritte:
Erzeugen einer Folge von einem oder mehreren Segmentbezeichnern (17) **durch** die Anwendung, wobei die Segmentbezeichner Sprachsegmente (18) bezeichnen, und Zuordnen eines benötigte-Sprachdaten-Identifikators, der Informationen über die benötigte Version von Sprachdaten bereitstellt, zu der Folge durch die Anwendung,
Bereitstellen von Sprachdaten, wobei die Sprachdaten aufweisen
- eine Vielzahl von Sprachsegmenten (18), die Segmentbezeichnern (17) entsprechend zugeordnet sind, und
- einen tatsächliche-Sprachdaten-Identifikator (14), der die Version der Sprachdaten (2) identifiziert,
Vergleichen des benötigte-Sprachdaten-Identifikators mit dem tatsächliche-Sprachdaten-Identifikator, und
Zusammensetzen von Sprache unter Bezugnahme auf die Folge von Segmentbezeichnern (17) und die Sprachdaten gemäß dem Ergebnis des Vergleichs,
wobei der benötigte-Sprachdaten-Identifikator und der tatsächliche-Sprachdaten-Identifikator jeweils einen Stammidentifikator (11, 12) zum Auffinden nicht kompatibler Reihen von Sprachdaten und einen Versionsidentifikator (13) aufweisen, der es ermöglicht, die Kompatibilität von Sprachdaten in einer abwärts kompatiblen Reihe zu ermitteln,
wobei die Sprachdaten (2) ein oder mehrere Zusammensetzungslisten (16) aufweisen, wobei die Zusammensetzungsliste (16) zeigt, wie Segmente von früher verteilten Sprachdaten mit einem unterschiedlichen Stammidentifikator (11, 12) aus Segmenten in den Sprachdaten, an die die Zusammensetzungsliste (16) angefügt ist, zusammengesetzt werden können,
- der Stammidentifikator (11, 12) der Sprachdaten auch den Identifikator der früher verteilten Sprachdaten aufweist,
- in dem vergleichenden Schritt überprüft wird, ob der Stammidentifikator (11, 12) in dem benötigte-Sprachdaten-Identifikator der gleiche ist wie einer der Stammidentifikatoren (11, 12) in dem tatsächliche-Sprachdaten-Identifikator, und
- die Anwendung die Verwendung von Zusammensetzungslisten (16) unterstützt.

2. Verfahren nach Anspruch 1, wobei Standardsprachdaten (6) vorzugsweise zusammen mit der Anwendung (1) bereitgestellt werden, und optionale Sprachdaten (2), die den tatsächliche-Sprachdaten-Identifikator (14) aufweisen, auch bereitgestellt werden, wobei die optionalen Sprachdaten (2) zum Zusammensetzen von Sprache verwendet werden, wenn der vergleichende Schritt ein vorbestimmtes Ergebnis ergibt, und ansonsten die Standardsprachdaten (6) verwendet werden.

3. Verfahren nach Anspruch 1 oder 2, wobei die optionalen Sprachdaten (2) verwendet werden, wenn der Vergleich zeigt, dass
- der Stammidentifikator (11, 12) in dem benötigte-Sprachdaten-Identifikator der gleiche ist wie der in dem tatsächliche-Sprachdaten-Identifikator, und
- der Versionsidentifikator (13) in dem benötigte-Sprachdaten-Identifikator nicht größer ist als der in dem tatsächliche-Sprachdaten-Identifikator.

4. Verfahren nach Anspruch 1 oder 2, wobei die optionalen Sprachdaten (2) auf einem Datenträger oder über das Internet oder durch kabellose Datenübertragung bereitgestellt werden.

5. Verfahren nach einem der vorstehenden Ansprüche und Anspruch 2, wobei die optionalen Sprachdaten (2) denselben Sprachinhalt ergeben wie die Standardsprachdaten (6), sie sich aber in akustischen Eigenschaften unterscheiden.

6. Verfahren nach einem der vorstehenden Ansprüche, wobei die Anwendung ein Navigationssystem für Automobile ist.

7. Ein Datenträger, der Sprachdaten aufweist, die zum Ausgeben von Sprache an einen Benutzer einer Anwendung verwendet werden, wobei der Datenträger aufweist
- einen ersten Speicherbereich (15, 16), auf dem eine Vielzahl von Sprachsegmenten (18-n) gespeichert ist, denen Segmentbezeichner (17-n) entsprechend zugeordnet sind, und
- einen zweiten Speicherbereich (14), auf dem ein tatsächliche-Sprachdaten-Identifikator (11-13) gespeichert ist, der die Version der Sprachdaten identifiziert, wobei der Identifikator Informationen über die Beziehung der Sprachdaten mit früheren oder anderen möglichen Versionen der Sprachdaten gibt
**dadurch gekennzeichnet, dass** der tatsächliche-Sprachdaten-Identifikator aufweist
- einen Stammidentifikator (11, 12) zum Unterscheiden verschiedener Serien von Sprachdaten und zum Auffinden nicht kompatibler Reihen von Sprachdaten, und
- einen Versionsidentifikator (13) zum Identifizieren der Position der Sprachdaten innerhalb der Serie von Sprachdaten, zu welcher er gehört, wobei ermöglicht wird, die Kompatibilität von Sprachdaten in einer abwärts kompatiblen Reihe aufzufinden,
wobei in dem ersten Speicherbereich eine oder mehrere Zusammensetzungslisten (16) gespeichert sind, wobei die Zusammensetzungsliste zeigt, wie Segmente von früher verteilten Sprachdaten mit einem unterschiedlichen Stammidentifikator aus Segmenten in den Sprachdaten, zu denen die Zusammensetzungsliste gehört, zusammengesetzt werden können.

8. Ein Datenträger nach Anspruch 7, wobei der Stammidentifikator Einträge für diese Stämme aufweist, zu welchen die Sprachdaten kompatibel sind.

9. Ein Datenträger nach einem der Ansprüche 7 oder 8, wobei die Sprachsegmente Klangdateien oder Datenfolgen, die von einem digitalen Abspieler verwendbar sind, oder Zeiger zu solchen Dateien oder Datenfolgen aufweisen.

## Revendications

1. Procédé de sortie vocale vers un utilisateur d'une application (4), dans lequel l'application génère, en référence à des données vocales (2, 6), des données concernant la sortie vocale conformément aux exigences de ladite application (4), **caractérisé par** les étapes suivantes de
générer, par ladite application, une séquence d'un ou plusieurs indicateur(s) de segment(s) (17), lesdits indicateurs de segments désignant des segments vocaux (18), et associant, par ladite application, un identificateur de données vocales requises fournissant de l'information sur la version requise de données vocales avec ladite séquence,
fournir des données vocales, lesdites données vocales incluant
- une pluralité de segments vocaux (18) respectivement associés aux indicateurs de segments (17), et
- un identificateur de données vocales réel (14) identifiant la version des données vocales (2),
comparer l'identificateur de données vocales requis avec l'identificateur de données vocales réel, et
composer de la parole en référence à ladite séquence d'indicateur de segments (17) et lesdites données vocales conformément au résultat de ladite comparaison, dans lequel l'identificateur de données vocales requis et l'identificateur de données vocales réel incluent chacun un identificateur racine (11, 12) pour détecter des lignes incompatibles de données vocales et un identificateur de version (13) permettant de détecter la compatibilité des données vocales dans une ligne rétro-compatible,
dans lequel les données vocales (2) incluent une ou plusieurs liste(s) de composition (16), ladite liste de composition (16) montrant comment les segments des données vocales distribuées précédemment avec un identificateur de racine différent (11, 12) peuvent être composés de segments dans les données vocales auxquelles la liste de composition (16) est attachée,
- l'identificateur de racine (11, 12) des données vocales comprend aussi l'identificateur des données vocales distribuées précédemment,
- dans l'étape de comparaison il est vérifié si l'identificateur de racine (11, 12) dans l'identificateur de données vocales requis est le même que celui des identificateurs de racine (11, 12) dans l'identificateur de données vocales réel, et
- l'application supporte l'utilisation de listes de composition (16).

2. Procédé selon la revendication 1, dans lequel les données vocales par défaut (6) sont prévues de préférence ensemble avec l'application (1) et des données vocales optionnelles (2) ayant l'identificateur de données vocales réel (14) sont aussi prévues, les données vocales optionnelles (2) étant utilisées pour composer de la parole si l'étape de comparaison rend un résultat prédéterminé, et autrement les données vocales par défaut (6) sont utilisées.

3. Procédé selon la revendication 1 ou 2, dans lequel les données vocales optionnelles (2) sont utilisées quand la comparaison montre que
- l'identificateur de racine (11, 12) dans l'identificateur de données vocales requis est le même que celui de l'identificateur de données vocales réel, et
- l'identificateur de version (13) dans l'identificateur de données vocales requis n'est pas plus grand que celui de l'identificateur de données vocales réel.

4. Procédé selon la revendication 1 ou 2, dans lequel les données vocales optionnelles (2) sont prévues sur un support de données ou par Internet ou par transmission de données sans fil.

5. Procédé selon l'une quelconque des revendications précédentes et la revendication 2, dans lequel les données vocales optionnelles (2) rendent le même contenu vocal que les données vocales par défaut (6), mais diffèrent par leurs caractéristiques acoustiques.

6. Procédé selon l'une quelconque des revendications précédentes, dans lequel l'application est un navigateur d'automobile.

7. Support de données comprenant des données vocales utilisées pour sortir de la parole vers un utilisateur d'une application, ledit support de données incluant
- une première région de stockage (15, 16) ayant enregistré une pluralité de segments vocaux (18-n) respectivement associés avec des indicateurs de segments (17-n), et
- une seconde région de stockage (14) ayant enregistré un identificateur de données vocales réel (11-13) identifiant la version des données vocales, ledit identificateur donnant de l'information sur la relation des données vocales aux autres versions possibles ou antérieures desdites données vocales,
**caractérisé en ce que** l'identificateur de données vocales réel comprend
- un identificateur de racine (11, 12) pour distinguer les séries différentes des données vocales et pour détecter des lignes de données vocales incompatibles, et
- un identificateur de version (13) pour identifier la position des données vocales au sein des séries de données vocales auxquelles elles appartiennent permettant de détecter la compatibilité des données vocales dans une ligne rétro-compatible,
dans lequel dans ladite première région de stockage une ou plusieurs liste(s) de composition (16) sont enregistrées, ladite liste de composition montrant comment les segments des données vocales distribuées antérieurement avec un identificateur de racine différent peuvent être composés de segments dans les données vocales auxquelles la liste de composition appartient.

8. Support de données selon la revendication 7, dans lequel l'identificateur de racine comprend des entrées pour ses racines avec lesquelles les données vocales sont compatibles.

9. Support de données selon l'une des revendications 7 ou 8, dans lequel les segments vocaux comprennent des fichiers son ou des chaînes de données utilisables par un lecteur numérique, ou des pointeurs vers de tels fichiers ou chaînes de données.
